# EUROPÄISCHE PATENTSCHRIFT

(11) **EP 2 307 773 B1**
(45) Veröffentlichungstag und Bekanntmachung des Hinweises auf die Patenterteilung: **04.09.2013**
(21) Anmeldenummer: 09741814.9
(22) Anmeldetag: 24.04.2009
(51) Int. Cl.: F16K 11/00, B01F 3/08, B01F 15/02, B01F 5/00

(54) **Sanitärarmatur mit Mischeinrichtung für Fluide unterschiedlicher Temperatur und Verwendung einer solchen Sanitärarmatur**
Sanitary armature comprising a mixing device for fluids at different temperatures and use of said type of sanitary armature
Armature sanitaire avec dispositif de mélange de fluides à différentes températures, et utilisation d'une telle armature sanitaire

(30) Priorität: 08.05.2008 DE 102008022852
(43) Veröffentlichungstag der Anmeldung: 13.04.2011
(73) Patentinhaber: Grohe AG, 58675 Hemer (DE)
(72) Erfinder: HUCK, Kai, 58300 Wetter (DE); STEINHOFF, Stefan, 59846 Sundern (DE)
(86) Internationale Anmeldenummer: PCT/EP2009/003000
(87) Internationale Veröffentlichungsnummer: WO 2009/135595

(56) Entgegenhaltungen:
- EP-A- 0 260 736
- DE-A1-102007 043 272
- DE-C- 732 632
- DE-U1- 20 209 009
- GB-A- 612 012
- GB-A- 2 073 604
- JP-A- 6 026 582
- JP-U- 54 172 326
- JP-U- 58 061 967
- US-A- 5 803 600
- US-A1- 2007 019 503

## Beschreibung

Die vorliegende Erfindung betrifft eine Sanitärarmatur für zwei Fluide mit unterschiedlicher Temperatur und eine Verwendung einer Sanitärarmatur.

Das Mischen von Fluiden mit unterschiedlicher Temperatur in einer Rohrleitung auf kurzem Wege ist häufig schwierig, da die Fluide nach dem Einlass in ein gemeinsames Rohr zunächst teilweise parallel zueinander weiter fließen und nur in der Mitte zwischen den beiden Fluidströmen ein Temperaturübergang stattfindet. Erst nach einer längeren Wegstrecke und den zugehörigen Verwirbelungen in der Rohrleitung findet eine völlige Durchmischung statt.
Bei Sanitärarmaturen, wo Mischwasser mit geregelter Temperatur abgegeben werden soll, kommen häufig Thermostatventile zum Einsatz. Ein bekanntes Ventilelement ist beispielsweise in der DE 10 2006 032 018 A1 offenbart. Diese Thermostatventile haben ein temperaturempfindliches Regelelement, das in Abhängigkeit von der Temperatur des Mischwassers ein Ventilelement in Form eines Hohlzylinders axial bewegt. Zwischen dem Hohlzylinder und einem Gehäuseteil werden Schlitze ausgebildet, durch die kaltes und warmes Wasser in den Innenraum des Hohlzylinders fließt, in dem das temperaturempfindliche Regelelement angeordnet ist. Im Innem des Hohlzylinders sollen sich das kalte und warme Wasser möglichst schnell vermischen, damit das Regelelement der Temperatur des Mischwasser ausgesetzt ist und das Ventilelement entsprechend der voreingestellten Temperatur die Schlitze zum Zuführen des kalten oder des warmen Wassers verstellt.
Häufig sind die Schlitze an den Ventilelementen so ausgebildet, dass es innerhalb des Hohlzylinders zu starken Verwirbelungen und somit zu einer guten Durchmischung kommt.
Weiterhin gibt es Armaturen, bei denen die Mischwassertemperatur über einen Temperaturfühler gemessen wird und aufgrund des Messergebnisses die Zufuhr von kaltem und warmem Wasser durch elektronische Ansteuerung der Absperrventile geregelt wird. Gerade bei kurzen Wegen muss für eine gute Durchmischung der beiden Wasserströme gesorgt werden, da nicht nur die Temperaturveränderung, sondern die exakte Temperatur ermittelt werden soll.

Ferner ist aus der DE 202 09 009 U1 ein kammförmiger Mikrovermischer bekannt, der aus einem Gehäuse und einem darin angeordneten Strukturelement besteht.

DE 732 632 offenbart eine Sanitärarmatur gemäβ dem Oberbegriff des Anspruchs 1.

Der Erfindung liegt die Aufgabe zugrunde, eine Sanitärarmatur für Fluide mit unterschiedlicher Temperatur zu verbessern.

Diese Aufgabe wird durch eine Sanitärarmatur mit den Merkmalen des Patentanspruchs 1 gelöst. Vorteilhafte Weiterbildungen sind Gegenstand von abhängigen Ansprüche und in der Beschreibung enthalten.

Vorteilhafterweise ist dabei der Einlass und somit die Einströmrichtung für das erste Fluid um 180° versetzt zum Einlass und der Einströmrichtung für das zweite Fluid angeordnet. Weiterhin ist der Auslass für das gemischte Fluid versetzt zur Einströmrichtung des ersten und des zweiten Fluides angeordnet. Somit strömen die beiden Fluide oder warmes und kaltes Wasser auf zwei sich gegenüberliegenden Seiten in die Mischeinrichtung hinein, werden im Innern der Mischeinrichtung ganz oder teilweise umgelenkt und strömen an der stromabwärts gelegenen Seite bzw. Unterseite der Mischeinrichtung aus deren Auslass heraus.

Gemäß einer Weiterbildung der Erfindung entspricht die Breite eines Steges zwischen zwei Einlassöffnungen der Breite einer Einlassöffnung. Weiterhin sind die Einlassöffnungen auf der Seite des Einlasses für das erste Fluid versetzt zu den Einlassöffnungen auf der Seite des Einlasses für das zweite Fluid angeordnet. Vorteilhafterweise sind die Einlassöffnungen auf der Seite des Einlasses für das erste Fluid so angeordnet, dass sie mit den Stegen auf der Seite des Einlasses für das zweite Fluid fluchten. Dadurch werden das erste und das zweite Fluid an den Einlässen durch die jeweiligen Einlassöffrtungen in Teilströme zerlegt, die jeweils das gleiche Volumen aufweisen und in gleichem Abstand zueinander verlaufen.
In der Mitte der Mischeinrichtung treffen die versetzt zueinander verlaufenden Teilströrne aufeinander und werden in Richtung des Auslasses umgelenkt. Während der Änderung der Strömungsrichtung in Richtung des Auslasses werden dabei die einzelnen Teilströme von der einen und der anderen Einlassseite miteinander verwoben.

Gemäß einer Ausbildung der Erfindung ist die Mischeinrichtung in Form einer Scheibe vorgesehen. Vorteilhafterweise ist deren äußere Kontur der fluidführenden Rohrleitung angepasst. Damit die Mischeinrichtung leicht in die Rohrleitung eingeschoben werden kann, weist sie an der stromaufwärts gelegenen Seite der Einlässe eine Kante mit einer Rundung auf.

Zum Mischen zweier Fluide mit unterschiedlicher Temperatur werden das erste Fluid zu einem ersten Einlass und das zweite Fluid zu einem gegenüber dem ersten Einlass versetzten zweiten Einlass einer Mischeinrichtung geleitet, wo die Fluide durch parallel zueinander angeordnete Einlassöffnungen in einzelne Teilströme zerlegt werden. Hierbei sind die Einlassöffnungen für das erste und für das zweite Fluid und somit deren Teilströme, die die Einlassöffnungen passiert haben, wiederum versetzt zueinander angeordnet. In der Mitte der Mischeinrichtung werden die Teilströme zu einem Auslass umgelenkt und dabei wieder miteinander verwoben und zusammengeführt, so dass eine thermische Durchmischung auf kurzem Weg erfolgt.

Mit der Erfindung wird weiterhin die Verwendung einer Sanitärarmatur bereitgestellt, wobei die Mischeinrichtung einen Einlass für kaltes Wasser und einen Einlass für heißes Wasser aufweist, das heiße und kalte Wasser durch Einlassöffnungen, die versetzt zueinander angeordnet sind, in Teilströme zerlegt und anschließend wieder miteinander verwoben wird.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung jedes Ausführungsbeispiels der Figur näher erläutert. Die dort dargestellten Möglichkeiten von Kombinationen der Weiterbildungsvarianten sind jedoch nicht abschließend.

Im Folgenden wird die Erfindung durch ein Ausführungsbeispiel anhand zeichnerischer Darstellung näher erläutert.

Dabei zeigen
- Figur 1: eine Mischeinrichtung in räumlicher Darstellung in Anströmsichtung
- Figur 2: die Mischeinrichtung in räumlicher Darstellung von der Auslassseite her gesehen
- Figur 3: einen Schnitt durch eine Mischeinrichtung
- Figur 4: einen Schnitt durch eine Armatur mit einer Mischeinrichtung
- Figur 5: einen Schnitt durch die Armatur aus Figur 4 entlang der Linie 5-5.

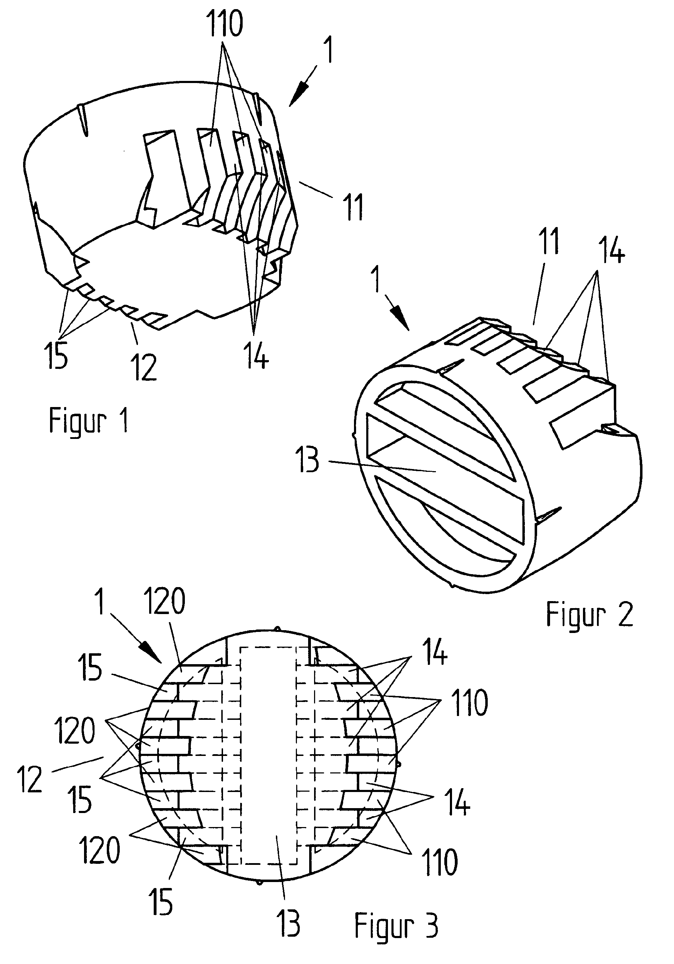

Die Figuren 1, 2 und 3 zeigen eine Mischeinrichtung 1 für zwei Fluide, mit der die Vermischung der Fluide auf kürzestem Wege erreicht werden soll.
Die Mischeinrichtung 1 besteht aus einem Kunststoffkörper, der einen Einlass 11 für das erste Fluid und einen Einlass 12 für das zweite Fluid aufweist, wobei die Einlässe 11, 12 um 180° versetzt zueinander angeordnet sind. Beide Einlässe 11, 12 weisen mehrere Einlassöffnungen 110, 120 auf, die durch Stege 14, 15 voneinander getrennt sind. Die Einlassöffnungen 110 auf der Einlassseite des ersten Fluids sind versetzt zu den Einlassöffnungen 120 des zweiten Fluids angeordnet und zwar derart, dass die Kanten der Stege 14,15 bzw. der Einlassöffnungen 110, 120 in einer Flucht liegen. Beim Einströmen der beiden Fluide in die Mischeinrichtung 1 werden diese durch die Einlassöffnungen 110, 120 in parallele Teilströme aufgespaltet. Aufgrund der Geometrie der Mischeinrichtung 1 sind dabei die Teilströme auf der Einlassseifie 11 jeweils um eine Stegbreite, die wiederum der Breite der Einlassöffnungen 110, 120 entspricht, versetzt zu den Teilströmen auf der Einlassseite 12 angeordnet. Im Innern der Mischeinrichtung 1 treffen die Teilströme aufeinander und werden in Richtung eines Auslasses 13 der mittig in der Mischeinrichtung 1 angeordnet ist, umgelenkt. Dabei werden die einzelnen Teilströme miteinander verwoben, so dass deren thermische Durchmischung auf kürzestem Weg erfolgt.

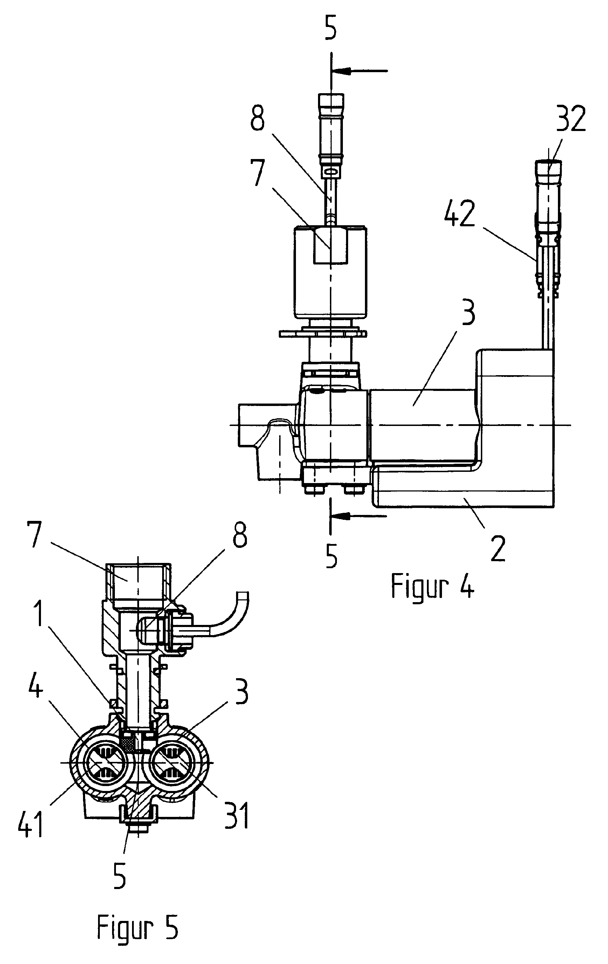

Figur 4 und Figur 5 zeigen die Verwendung einer Mischeinrichtung 1 in einer Sanitärmatur. Die Sanitärmatur umfasst ein Gehäuse 2, in welchem ein Kaltwasseranschluss mit einem Kaltwasserkanal 3 und ein Heißwasseranschluss mit einem Heißwasserkanal 4 angeordnet sind. Zur Absperrung des Zuflusses und zum Mischen des heißen und kalten Wassers sind Absperrventile 31, 41 angeordnet, die über einen (nicht dargestellten) Elektro- oder Servomotor angesteuert werden. Da die Sanitärarmatur unterhalb eines Waschtisches oder unter Putz montiert wird, sind die Motoren über elektrisehe Leitungen 32, 42 mit extern angeordneten Bedienelementen verbunden.
Bei geöffneten Absperrventilen 31, 42 gelangt heißes und kaltes Wasser in eine Mischkammer 5 und von dort zum Auslauf 7 der Sanitärmatur. Für eine mögliche Regelung der Mischtemperatur ist im Bereich des Auslaufes 7 ein Temperaturfühler 8 eingesetzt, der wiederum mit einer Anzeige oder einem Mess- und Regelelement verbunden sein kann. Ohne eine Mischeinrichtung würden die beiden Fluide nach dem Durchströmen der Mischkammer 5 weitgehend parallel bis zum Auslauf 7 fließen, ohne dass es zur Durchmischung aufgrund von Verwirbelungen im Auslassrohr käme.

Durch den Einsatz der Mischeinrichtung 1, deren äußere Geometrie im Bereich der Einlässe 11, 12 dem Kaltwasserkanal 3 und dem Heißwasserkanal 4 angepasst ist, werden das kalte und heiße Wasser auf geringem Weg vollständig durchmischt, so dass der Temperaturfühler 8, der nur wenige Zentimeter von der Mischeinrichtung 1 entfernt angeordnet ist, zuverlässige Werte liefern kann und somit sehr kompakte Bauweisen ermöglicht werden.

## Patentansprüche

1. Sanitärarmatur mit einem Gehäuse (2), in welchem ein Haltwasseranschluß mit einem Haltwasser Kanal (3) und ein Heißwasseranschluß mit einem Heißwasserkanal (4) angeordnet sind, und einer Mischeinrichtung für zwei Fluide mit unterschiedlicher Temperatur **dadurch gekennzeichnet, daß** die Mischeinrichtung (1) aus einem Kunststoffkörpe besteht
- mit je einem Einlass (11, 12) für das erste Fluid und das zweite Fluid,
- und einem Auslass (13) für das gemischte Fluid
- bei der
- die Einlässe (11, 12) eine Mehrzahl von Einlassöffnungen (110, 120) aufweisen, die parallel zueinander angeordnet und durch Stege (14, 15) voneinander getrennt sind,
- das erste und das zweite Fluid an den Einlässen (11, 12) durch die jeweiligen Einlassöffnungen (110 120) in Teilströme zerlegt werden
- bei der die Teilströme im Innern der Mischeinrichtung (1) bei Änderung der Strömungsrichtung in Richtung des Auslasses (13) miteinander verwoben werden
und
- die außere Geometrie im Bereich der Einlässe (11, 12) dem Haltwasserkanal (3) und dem Heißwasserkanal (4) angepaßt ist

2. Sanitärarmatur nach Anspruch 1, wobei bei der Mischeinrichtung (1) der Einlass (11) und somit die Einströmrichtung für das erste Fluid versetzt zum Einlass (12) und der Einströmrichtung für das zweite Fluid angeordnet ist.

3. Sanitärarmatur nach einem der vorhergehenden Ansprüche, wobei bei der Mischeinrichtung (1) die Breite eines Steges (14, 15) zwischen zwei Einlassöffnungen (110, 120) der Breite einer Einlassöffnung (110, 120) entspricht.

4. Sanitärarmatur nach einem der vorhergehenden Ansprüche wobei bei der Mischeinrichtung die Einlassöffnungen (110) auf der Seite des Einlasses (11) für das erste Fluid versetzt zu den Einlassöffnungen (120) auf der Seite des Einlasses (12) für das zweite Fluid angeordnet sind.

5. Sanitärarmatur nach einem der vorhergehenden Ansprüche, wobei bei der Mischeinrichtung die Einlassöffnungen (110) auf der Seite des Einlasses (11) für das erste Fluid so angeordnet sind, dass sie mit den Stegen (15) auf der Seite des Einlasses (12) für das zweite Fluid fluchten.

6. Sanitärarmatur nach einem der vorhergehenden Ansprüche, wobei bei Mischeinrichtung in Form einer Scheibe vorgesehen ist.

7. Sanitärarmatur nach einem der vorhergehenden Ansprüche, wobei die äußere Kontur der Mischeinrichtung einer fluidführenden Rohrleitung angepasst ist.

8. Verwendung einer Sanitärarmatur gemäß einem der Ansprüche 1 bis 7 bei der die Fluide durch Einlassöffnungen (110, 120) in der Mischeinrichtung (1), die versetzt zueinander angeordnet sind, in Teilströme zerlegt und anschließend wieder miteinander verwoben werden.

## Claims

1. Sanitary fitting having a housing (2), in which a cold water connection having a cold water channel (3) and a hot water connection having a hot water channel (4) are arranged, and having a mixing device (1) for two fluids of different temperature, **characterised in that** the mixing device (1) consists of a plastics body
- having an inlet (11, 12) for each of the first fluid and the second fluid,
- and an outlet (13) for the mixed fluid,
- wherein
- the inlets (11, 12) have a plurality of inlet openings (110, 120) which are arranged parallel to one another and are separated from one another by partitions (14, 15),
- the first fluid and the second fluid are divided into sub-flows at the inlets (11, 12) by the respective inlet openings (110, 120),
- wherein in the interior of the mixing device (1) the sub-flows are intermixed with one another on changing the direction of flow in the direction towards the outlet (13),
and the outer geometry in the region of the inlets (11, 12) is matched to the cold water channel (3) and the hot water channel (4).

2. Sanitary fitting according to claim 1, wherein in the mixing device (1) the inlet (11) and accordingly the inflow direction for the first fluid is arranged staggered relative to the inlet (12) and the inflow direction for the second fluid.

3. Sanitary fitting according to either one of the preceding claims, wherein in the mixing device (1) the width of a partition (14, 15) between two inlet openings (110, 120) corresponds to the width of an inlet opening (110, 120).

4. Sanitary fitting according to any one of the preceding claims, wherein in the mixing device the inlet openings (110) on the side of the inlet (11) for the first fluid are arranged staggered relative to the inlet openings (120) on the side of the inlet (12) for the second fluid.

5. Sanitary fitting according to any one of the preceding claims, wherein in the mixing device the inlet openings (110) on the side of the inlet (11) for the first fluid are arranged so that they are in alignment with the partitions (15) on the side of the inlet (12) for the second fluid.

6. Sanitary fitting according to any one of the preceding claims, wherein the mixing device is provided in the form of a disc.

7. Sanitary fitting according to any one of the preceding claims, wherein the outer contour of the mixing device is matched to a fluid-conducting pipeline.

8. Use of a sanitary fitting according to any one of claims 1 to 7, wherein the fluids are divided into sub-flows by inlet openings (110, 120) in the mixing device (1), which inlet openings are arranged staggered relative to one another, and are then intermixed with one another again.

## Revendications

1. Robinetterie sanitaire comportant un boitier (2) dans lequel sont montés un raccord pour l'eau froide avec un canal d'eau froide (3) et un raccord pour l'eau chaude avec un canal d'eau chaude (4), ainsi qu'un dispositif mélangeur (1) pour deux fluides ayant une température différente,
**caractérisée en ce que**
le dispositif mélangeur (1) est constitué d'un corps en matériau synthétique comportant :
- une entrée respective (11, 12) pour le premier fluide et pour le second fluide, et
- une sortie (13) pour le fluide mélangé,
dans lequel
- les entrées (11, 12) comportent une série d'ouvertures d'entrée (110, 120) qui sont disposées parallèlement les unes aux autres et sont séparées les unes des autres par des nervures (14, 15),
- le premier et le second fluide sont subdivisés en flux partiels au niveau des entrées (11, 12) par les ouvertures d'entrée respectives (110, 120),
- les flux partiels sont entremêlés entre eux à la partie interne du dispositif mélangeur (1) suite à une modification de la direction d'écoulement en direction de la sortie (13), et
- la géométrie externe est adaptée dans la zone des entrées (11, 12) au canal pour l'eau froide (3) et au canal pour l'eau chaude (14).

2. Robinetterie sanitaire conforme à la revendication 1, dans laquelle, dans le dispositif mélangeur (1) l'entrée (11) et par suite la direction d'introduction du premier fluide est décalée par rapport à l'entrée (12) et à la direction d'introduction du second fluide.

3. Robinetterie sanitaire conforme à l'une des revendications précédentes, dans laquelle, dans le dispositif mélangeur (1) la largeur d'une nervure (14, 15) située entre deux ouvertures d'entrée (110, 120) correspond à la largeur d'une ouverture d'entrée (110, 120).

4. Robinetterie sanitaire conforme à l'une des revendications précédentes, dans laquelle, dans le dispositif mélangeur (1), les ouvertures d'entrée (110) de l'entrée (11) pour le premier fluide sont décalées par rapport aux ouvertures d'entrée (120) de l'entrée (12) pour le second fluide.

5. Robinetterie sanitaire conforme à l'une des revendications précédentes, dans laquelle, dans le dispositif mélangeur (1), les ouvertures d'entrée (110) de l'entrée (11) pour le premier fluide sont positionnées de sorte qu'elles soient alignées avec les nervures (15) de l'entrée (12) pour le second fluide.

6. Robinetterie sanitaire conforme à l'une des revendications précédentes, dans laquelle, le dispositif mélangeur (1), est réalisé sous la forme d'un disque.

7. Robinetterie sanitaire conforme à l'une des revendications précédentes, dans laquelle, le contour externe du dispositif mélangeur est adapté à une conduite tubulaire de transfert de fluide.

8. Utilisation d'une robinetterie sanitaire conforme à l'une des revendications 1 à 7, selon laquelle les fluides sont subdivisés en flux partiels au travers d'ouvertures d'entrée (110, 120) dans le dispositif mélangeur (1) qui sont décalées les unes par rapport aux autres puis sont à nouveau entremêlés.
